# EUROPEAN PATENT APPLICATION

(11) **EP 3 316 640 A1**
(43) Date of publication of application: **02.05.2018**
(21) Application number: 16814496.2
(22) Date of filing: 24.06.2016
(51) Int. Cl.: H04W 72/04

(54) **USER TERMINAL, WIRELESS BASE STATION, AND WIRELESS COMMUNICATION METHOD**

(30) Priority: 26.06.2015 JP 2015128736
(71) Applicant: NTT DOCOMO, INC., Chiyoda-ku Tokyo 100-6150 (JP)
(72) Inventor: TAKEDA, Kazuki, Tokyo 100-6150 (JP); HARADA, Hiroki, Tokyo 100-6150 (JP); NAGATA, Satoshi, Tokyo 100-6150 (JP); UCHINO, Tooru, Tokyo 100-6150 (JP)
(74) Representative: Hoffmann Eitle
(86) International application number: PCT/JP2016/068857
(87) International publication number: WO 2016/208727

(57) **Abstract**

In order to properly perform communication even when the number of component carriers that can be set for a user terminal is extended compared with an existing system, a user terminal according to an aspect of the present invention includes: a reception section that detects instruction information of a reception of a downlink shared channel on a downlink control channel; a transmission section that transmits uplink control information on the reception of the downlink shared channel corresponding to the instruction information; and a control section that determines a PUCCH format for transmitting the uplink control information from a plurality of PUCCH formats including a large-capacity PUCCH format having a larger capacity than PUCCH (Physical Uplink Control Channel) format 3, wherein the control section determines a PUCCH resource for transmission with the large-capacity PUCCH format based on the instruction information.

## Description

### Technical Field

The present invention relates to a user terminal, a radio base station and a radio communication method in the next-generation mobile communication system.

### Background Art

In UMTS (Universal Mobile Telecommunications System) networks, for the purpose of higher data rates, low delay and the like, Long Term Evolution (LTE) has been specified (Non-Patent Literature 1). Further, for the purpose of wider bands and higher speed than LTE, a successor system (for example, called LTE-A (LTE-Advanced), FRA (Future Radio Access) and the like) to LTE has been studied.

One of technologies for wider bands in LTE-A (LTE Rel.10-12) is Carrier Aggregation (CA). According to the CA, a plurality of base frequency blocks can be used integrally for communication. A base frequency block in CA is called Component Carrier (CC), and corresponds to the system band of LTE Rel.8.

Moreover, in LTE/LTE-A, HARQ (Hybrid Automatic Repeat reQuest) is used for retransmission control. In HARQ, (scheduling-performed, scheduled) user terminal (UE: User Equipment) to which data reception is assigned notifies a device on the network side (for example, radio base station (eNB)) of a receipt confirmation signal (HARQ-ACK) related to the data. The radio base station determines whether to retransmit the data, based on the HARQ-ACK,.

### Citation List

### Non-Patent Literature

[Non-patent Literature 1] 3GPP TS 36.300 "Evolved Universal Terrestrial Radio Access (E-UTRA) and Evolved Universal Terrestrial Radio Access Network (E-UTRAN); Overall description; Stage 2"

### Summary of Invention

### Technical Problem

In CA of LTE Rel.10-12, the number of CCs that can be set per user terminal is limited to a maximum of 5 CCs. On the other hand, from LTE Rel.13 and beyond, in order to realize more flexible and high-speed radio communication, it has been considered to relax the limit on the number of CCs that can be set for the user terminal and to set 6 or more CCs (more than 5 CCs). Here, the carrier aggregation in which 6 or more CCs can be set may be also called, for example, enhanced CA, or Rel.13 CA, etc.

In a case where the number of CCs that can be set for the user terminal is enhanced to 6 or more (e.g., 32), it is assumed to use a new PUCCH format having a large number of bits that can transmit many HARQ-ACKs. However, when such a large PUCCH format is used, unless control of radio resources for PUCCH transmission (PUCCH resources) is performed properly, the frequency utilization efficiency may be degraded and then the throughput improvement effect caused by the enhanced CA may not be achieved properly.

The present invention has been made in view of such a respect, and an object of the present invention is to provide a user terminal, a radio base station and a radio communication method capable of properly performing communication, even when the number of component carriers that can be set for a user terminal is enhanced compared with existing systems.

### Solution to Problem

The user terminal according to one aspect of the present invention includes: a reception section that detects instruction information of a reception of a downlink shared channel on a downlink control channel; a transmission section that transmits uplink control information on the reception of the downlink shared channel corresponding to the instruction information; and a control section that determines a PUCCH format for transmitting the uplink control information from a plurality of PUCCH formats including a large-capacity PUCCH format having a larger capacity than PUCCH (Physical Uplink Control Channel) format 3, wherein the control section determines a PUCCH resource for transmission with the large-capacity PUCCH format based on the instruction information.

### Advantageous Effects of Invention

According to the present invention, communication can be performed properly even when the number of component carriers that can be set for a user terminal is enhanced compared with existing systems.

### Brief Description of Drawings

FIG. 1A is a diagram showing an exemplary switching of a PUCCH format according to Embodiment 1.1, FIG. 1B is a diagram showing an exemplary switching of the PUCCH format according to Embodiment 1.2, and FIG. 1C is a diagram showing an exemplary switching of the PUCCH format according to Embodiment 1.3;
FIG. 2 contains diagrams showing an example in which Embodiment 1.3 and Embodiment 2.1 are used in combination;
FIG. 3 contains diagrams showing an example in which Embodiment 1.1 or 1.2 and Embodiment 2.1 are used in combination;
FIG. 4A contains diagrams showing an exemplary scheduling in embodiment 2.2, and FIG. 4B is a diagram showing an exemplary ARI table for each PUCCH format;
FIG. 5A is a diagram showing an exemplary scheduling in embodiment 2.3, and FIG. 5B is a diagram showing an exemplary ARI table for each PUCCH format;
FIG. 6 is a diagram showing an exemplary relationship between the number of scheduled CCs and Total DAI;
FIG. 7A is a diagram showing an exemplary relationship between scheduling and a PUCCH format in Third Embodiment, and FIG. 7B is a diagram showing another exemplary relationship between scheduling and a PUCCH format in Third Embodiment;
FIG. 8A is a diagram showing an exemplary relationship between the number of scheduled CCs and a bitmap, and FIG. 8B is a diagram showing another exemplary relationship between the number of scheduled CCs and a bitmap;
FIG. 9A is a diagram showing an exemplary relationship between scheduling and a PUCCH format in Third Embodiment, and FIG. 9B is a diagram showing another exemplary relationship between scheduling and a PUCCH format in Third Embodiment;
FIG. 10 is a diagram showing an exemplary schematic configuration of a radio communication system according to Embodiment of the present invention;
FIG. 11 is a diagram showing an exemplary overall configuration of a radio base station according to Embodiment of the present invention;
FIG. 12 is a diagram showing an exemplary function configuration of a radio base station according to Embodiment of the present invention;
FIG. 13 is a diagram showing an exemplary overall configuration of a user terminal according to Embodiment of the present invention; and
FIG. 14 is a diagram showing an exemplary function configuration of a user terminal according to Embodiment of the present invention.

### Description of Embodiments

First, HARQ-ACK in the existing LTE system (Rel.10 to 12) will be described. In Rel.10 to 12, CA having up to 5 CCs has been introduced. In order to enable HARQ feedback of up to the 5 CCs, a PUCCH format 3 has been specified which can transmit more bits for HARQ-ACK (maximum 10 bits for FDD (Frequency Division Duplex) and maximum 21 bits for TDD (Time Division Duplex)).

A user terminal to which a PUCCH format 1a/1b is configured transmits HARQ-ACK with PUCCH resources (e.g., frequency and/or code resources) corresponding to CCE/ECCE (Control Channel Element/Enhanced CCE) index of a downlink control channel (PDCCH (Physical Downlink Control Channel)/EPDCCH (Enhanced PDCCH)) to schedule Downlink Shared Channel (PDSCH: Physical Downlink Shared Channel)).

Moreover, a user terminal to which the PUCCH format 3 is configured interprets TPC (Transmit Power Control) command bit included in DCI (Downlink Control Information) of PDCCH/EPDCCH to schedule SCell (Secondary Cell) as an ARI (ACK/NACK Resource Indicator) and transmits HARQ-ACK with any one of PUCCH resources specified by the ARI, among four resources configured by higher layer signaling (e.g., RRC signaling).

Preferably the value of ARI is the same for PDCCH/EPDCCH to schedule PDSCH of different CCs. Moreover, when PDCCH/EPDCCH to schedule PDSCH of SCell is not detected (only scheduling of PCell (Primary Cell) is detected), HARQ-ACK is transmitted with the PUCCH resource one-to-one corresponding to CCE/ECCE index of PDCCH/EPDCCH to schedule PDSCH of PCell.

In addition, in LTE Rel.13, CA for which 6 or more CCs (more than 5 CCs) are set (referred to as enhanced CA, Rel.13 CA, etc.) has been considered. For example, in Rel.13 CA, it has been considered to aggregate up to 32 CCs.

With the existing PUCCH format (e.g., PUCCH format 3), HARQ-ACKs for 32 CCs cannot be transmitted. Then, it is considered in Rel.13 to specify a new PUCCH format allowing the large number of bits to be transmitted. Note that the new PUCCH format may be called a PUCCH format 4, a large-capacity PUCCH format, an enhanced PUCCH format, a new format, or the like.

With the new PUCCH format, it is considered, for example, (1) to store HARQ-ACK of up to a predetermined number of bits (e.g., 128 bits) or more, (2) to add CRC for HARQ-ACK bits having a predetermined number of bits (e.g., 22 bits) or more, and (3) to apply TBCC (Tail-Biting Convolutional Code) and rate matching for HARQ-ACK bits having a predetermined number of bits (e.g., 22 bits) or more.

However, no discussion has been made on in what kind of case the new PUCCH format is used for transmission, how the user terminal determines resource assignment of the new PUCCH format, and the like. Therefore, when a large new PUCCH format is used, if not controlled properly, frequency utilization efficiency may be degraded and then the throughput improvement effect caused by the enhanced CA may not be achieved properly.

Accordingly, from LTE Rel.13 and beyond, in order to enable HARQ-ACK feedback suitable for CA using 6 or more CCs (e.g., 32 CCs), the present inventors have found a method for determining whether or not to use the new PUCCH format and a method for specifying resources for the new PUCCH format having a larger number of transmittable bits than the PUCCH format of the existing system.

Hereinbelow, embodiments according to the present invention will be described. In the respective embodiments, a description is given of an example of a case where CA using up to 32 CCs is set for the user terminal, but application of the present invention is not limited to this. For example, even when CA using 5 or less CCs is set, the method described in the respective embodiments can be applied.

### (First Embodiment: Method of switching a PUCCH format for Rel.13 CA)

In First Embodiment of the present invention, a method of switching a PUCCH format for Rel.13 CA will be described.

The present inventors observed that since a new PUCCH format has a large payload, there is a high possibility to impose constraints such as a fewer number of user Multiplexing by CDM (Code Division Multiplexing), the large required SINR (Signal-to-Interference plus Noise Ratio), and the large number of required PRB (Physical Resource Block), compared to the existing PUCCH format. Therefore, the present inventors have conceived that it is desirable for UEs with small data to perform transmission with the existing PUCCH format as much as possible, and when the number of CCs in which data is scheduled is large, switching is performed to allow transmission with the format of large payload, and have found out this embodiment. However, the policy of switching is not limited to this.

Specifically, the present inventors found out determining the PUCCH format for transmission according to the detection situation (number) of PDCCH/EPDCCH to which the PDSCHs are assigned. For example, the present inventors have found out a control (embodiment 1.1) based on the number of the PDCCHs/EPDCCHs to which the PDSCHs are assigned, and a control (embodiment 1.2) based on the CC number of the CCs to which the PDSCHs are assigned. Moreover, the present inventors have found out determining the PUCCH format for transmission according to the number of CCs set in a higher layer (embodiment 1.3).

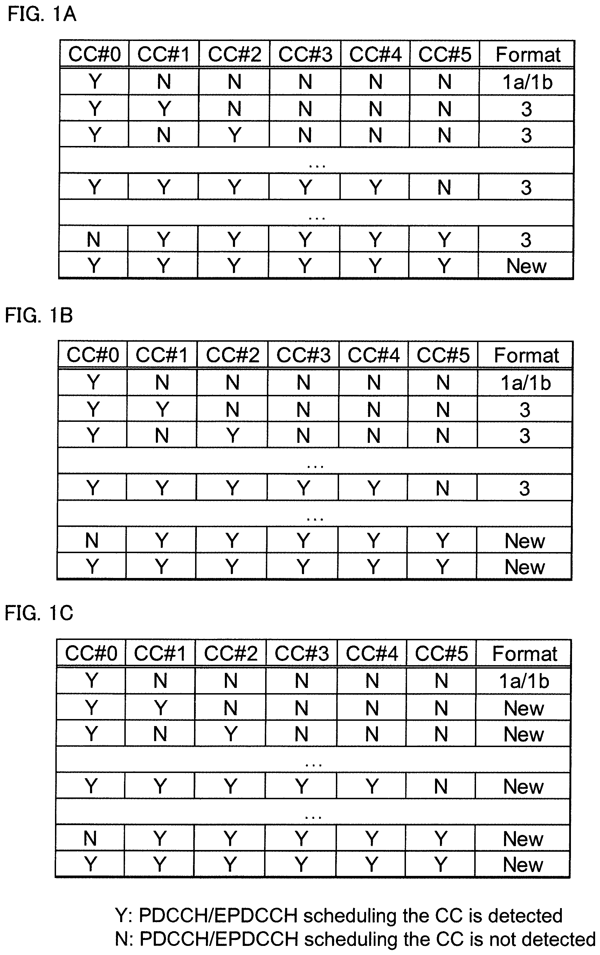

FIG. 1 is a diagram showing an exemplary switching of a PUCCH format according to First Embodiment. FIGs. 1A to 1C correspond to embodiments 1.1 to 1.3, respectively. In this example, a radio base station (also simply referred to as a base station) configures 6 CCs for the UE, and schedules the PDSCH for at least one of CC#0 to CC#5. In the following description, First Embodiment will be described in detail with reference to FIG. 1 as needed.

### <Embodiment 1.1>

The embodiment 1.1 controls a PUCCH format for transmission according to the number of detections of PDCCHs/EPDCCHs to which the PDSCHs are assigned. As the number of detections of PDCCHs/EPDCCHs to which the PDSCHs are assigned, the number of CCs scheduled by the detected PDCCH/EPDCCH may be used. For example, as shown in FIG. 1A, if scheduling of 2 or more and 5 or less CCs including SCell is detected, the PUCCH format 3 is used, if scheduling of more than 5 CCs is detected, the new PUCCH format is used.

Specifically, when detecting the scheduling of only PCell, the UE performs transmission with the PUCCH format 1a/1b (same as the existing operation). Moreover, when detecting any scheduling of 5 or less CCs including SCell, the UE performs transmission with the PUCCH format 3. Furthermore, when detecting any scheduling of 6 or more CCs including SCell, the UE performs transmission with the new PUCCH format.

### <Embodiment 1.2>

The embodiment 1.2 controls a PUCCH format for transmission according to the scheduled CC. As shown in FIG. 1B, this embodiment differs from Embodiment 1.1 in that it is not based on the number of CCs, but the scheduled CCs are based on some CCs. Note that CCs can be identified based on, for example, the CC number of a scheduled CC and SCell number (SCell index).

Specifically, when detecting scheduling of only PCell (CC#0), the UE performs transmission with the PUCCH format 1a/1b (same as the existing operation). Moreover, when detecting scheduling for only CC#0 to CC#4, the UE performs transmission with the PUCCH format 3. Furthermore, when detecting scheduling for CC#5 or more, the UE performs transmission with the new PUCCH format.

### <Embodiment 1.3>

The embodiment 1.3 controls a PUCCH format for transmission according to the number of configured CCs. As shown in FIG. 1C, the UE determines a PUCCH format based on the number of CCs semi-statically notified by higher layer signaling (e.g., RRC signaling) and the like. For example, the UE may determine that when 32 CCs are configured by higher layer signaling, the new PUCCH format can be used.

Specifically, when detecting scheduling of only PCell, the UE performs transmission with the PUCCH format 1a/1b (same as the existing operation). Moreover, when detecting scheduling in any SCell, the UE performs transmission with the new PUCCH format. That is, Embodiment 1.3 does not perform transmission with the PUCCH format 3.

Note that Embodiment 1.3 may determine that the UE can use the new PUCCH format, based on, instead of the number of CCs, information on availability of use of the new PUCCH format notified by higher layer signaling (for example, information represented by one bit, in which '1' indicates that the new PUCCH format can be used or specifies that the new PUCCH format is used for transmitting HARQ-ACK). The higher layer signaling may include bandwidth (e.g., the number of PRBs), modulation scheme, coding scheme, and the like to transmit the new PUCCH format.

As described above, according to First Embodiment, even when CA of more than 5 CCs is applied, the UE can dynamically select a proper PUCCH format to transmit the HARQ-ACK.

Note that, in First Embodiment, according to the detection situation (number) of PDCCHs/EPDCCHs to which PDSCHs are assigned or the number of configured CCs, in addition to/instead of switching of the PUCCH format, a codebook (A/N bit string) size of the HARQ-ACK may be switched.

Incidentally, the present inventors have studied the above-mentioned First Embodiment, and further observed a method of specifying a PUCCH resource when using the new PUCCH format. The present inventors have discovered that, in the case where the UE dynamically switches and uses the PUCCH format like First Embodiment, when a detection failure of PDCCH/EPDCCH occurs, there is a possibility that identification of the PUCCH format, and the number of A/N bits, etc., is different between the radio base station and the UE. The UE performs encoding on the A/N bit string, and the radio base station performs decoding. However, when the above-described identification is different, there occurs such a problem that the UE cannot correctly perform decoding and the A/N performance remarkably deteriorates.

Based on the above-mentioned observation, the present inventors have found out a method of specifying a PUCCH resource, which is suitable for the method of switching a PUCCH format for Rel.13 CA. In the following embodiment, the method of specifying PUCCH resource will be described in detail.

### (Second Embodiment : Method of specifying a PUCCH resource for Rel.13 CA by ARI)

In Second Embodiment, assignment of PUCCH resources for Rel.13 CA will be described. Although Second Embodiment includes several methods, it is common to any methods in that a predetermined bit string (e.g., TPC command) included in PDCCH/EPDCCH to schedule PDSCH of SCell is interpreted as an ARI.

Also, it is common in that any of PUCCH resources specified by the ARI is selected based on correspondence relationship between the ARI and a PUCCH resource (may be also referred to as ARI resource table, ARI table, and PUCCH table, etc.), which is set by higher layer signaling. Here, in the correspondence relationship, one or more (e.g., four) resources correspond to separete ARIs.

The Second Embodiment includes a method in which the PDCCH/EPDCCH includes one ARI, and resources of a new PUCCH format are determined by use of the ARI and a predetermined ARI table (Embodiment 2.1).

Further, Second Embodiment includes a method in which the PDCCH/EPDCCH includes one ARI, and resources of a new PUCCH format are determined by use of the ARI and an ARI table configured independently of other PUCCH formats (e.g., PUCCH format 3) (Embodiment 2.2).

Moreover, Second Embodiment includes a method in which the PDCCH/EPDCCH includes a plurality of ARIs, and resources of a new PUCCH format are determined by use of one of ARIs and an ARI table configured independently of other PUCCH formats (e.g., PUCCH format 3) (Embodiment 2.3).

### <Embodiment 2.1>

In Embodiment 2.1, the UE interprets a predetermined bit string (e.g., TPC command) included in PDCCH/EPDCCH to schedule PDSCH of SCell as an ARI, selects a PUCCH resource specified by the ARI based on an ARI table, and performs transmission with the new PUCCH format. Note that the ARI table may be an ARI table commonly used with other PUCCH formats (e.g., PUCCH format 3).

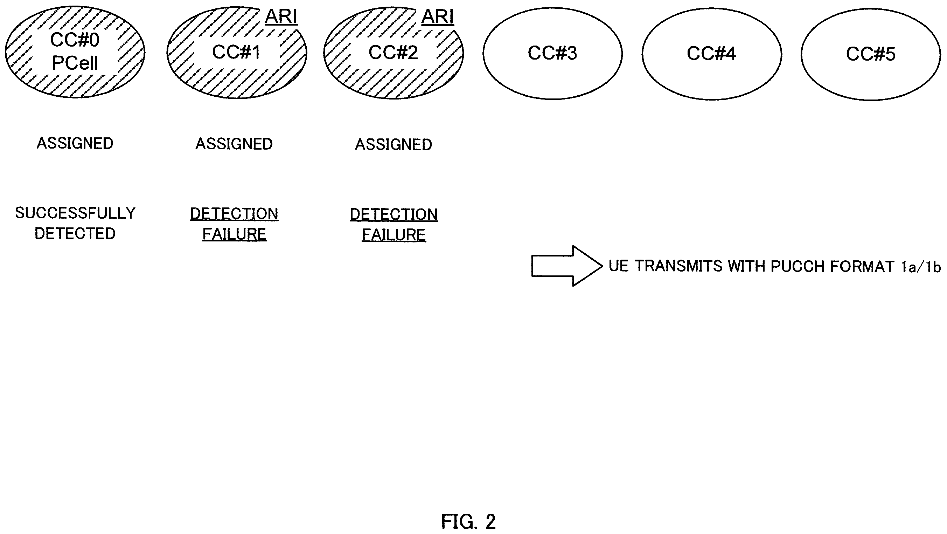

When Embodiment 2.1 is applied to Embodiment 1.3, its control operation is the same as in the case where the PUCCH format 3 is configured in the existing CA, and thereby it is possible to prevent control of the UE from being excessively complicated. However, actually, the UE may fail to detect the PDCCH/EPDCCH. The behaviors of the UE when a detection failure occurs will be described with reference to FIG. 2.

FIG. 2 contains diagrams showing an example in which Embodiment 1.3 and Embodiment 2.1 are used in combination. In this example, the base station configures 6 CCs and performs scheduling on CC#0/CC#1/CC#2. The base station, when having detected normally the PDCCHs/EPDCCHs corresponding to the respective PDSCHs of CC#0/CC#1/CC#2, identifies a TPC field of DCI to schedule CC#1 and CC#2 as an ARI, and performs transmission with the new PUCCH format using a PUCCH resource specified by the ARI.

However, when the UE can detect only the PDCCH/EPDCCH for PCell (the UE fails to detect the PDCCHs/EPDCCHs for CC#1 and CC#2), the UE performs transmission with the PUCCH format 1a/1b in PCell.

Accordingly, the base station, when assigning PDSCH to SCell for the UE, preferably attempts to detect a plurality of PUCCH resources in which the PUCCH may be possibly transmitted. Specifically, it is desirable for the base station to reserve, for the UE, both the PUCCH resource of the new PUCCH format specified by the ARI and the PUCCH resource of PUCCH format 1a/1b corresponding to CCE index of PDCCH/ECCE index of EPDCCH to which the PDSCH of PCell is assigned, and to perform the detection operation in the both resources.

Note that the ARI may be represented by a field other than the TPC command. For example, the ARI may be represented by all or a part of an arbitrary field specified by the DCI of the existing system, or may be represented by a new field. Moreover, information on which field of DCI indicates the ARI may be notified to the user terminal by higher layer signaling (for example, RRC signaling, or broadcast information) or the like.

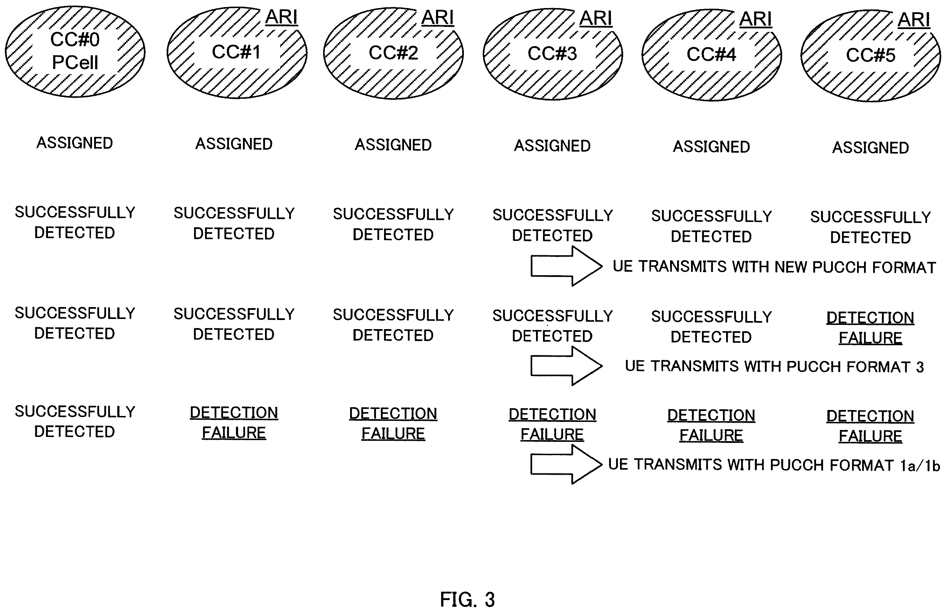

When Embodiment 2.1 is applied to Embodiment 1.1 or 1.2, the ARI can be interpreted in a plurality of PUCCH formats. The present inventors observed that there is a problem that the UE cannot properly determine the PUCCH resources based on the ARI in this case. The problem will be described with reference to FIG. 3.

FIG. 3 contains diagrams showing an example in which Embodiment 1.1 or 1.2 and Embodiment 2.1 are used in combination. In this example, the base station configures 6 CCs and performs scheduling on all of CC#0 to CC#5. The UE, when having detected normally PDCCHs/EPDCCHs corresponding to the respective PDSCHs of CC#0 to CC#5, performs transmission with the new PUCCH format, based on an ARI included in the DCI to schedule CC#1 to CC#5, using a PUCCH resource specified by the ARI.

However, the UE, when having failed to detect CC#5, performs transmission with the PUCCH format 3 based on an ARI included in DCI to schedule CC#1 to CC#4 using a PUCCH resource specified by the ARI. Moreover, the UE, when having detected only DCI to schedule PCell (failed to detect DCI for CC#1 to CC#5), performs transmission with the PUCCH format 1a/1b in PCell.

Accordingly, the UE, even when having received the ARI, cannot identify (distinguish) whether the ARI is an ARI of PUCCH format 3 or an ARI of the new PUCCH format.

Then, the present inventors have conceived of setting a correspondence relationship between an ARI and a PUCCH resource for each PUCCH format, and have found out a form in which the UE specifies the correspondence relationship to use according to the PUCCH format (Embodiment 2.2) and a form in which the radio base station notifies the UE of a plurality of ARIs and specifies a correspondence relationship to use (Embodiment 2.3).

In Embodiments 2.2 and 2.3, the UE determines PUCCH resources based on different ARI tables depending on when performing transmission with the PUCCH format 3 or with the new PUCCH format. Each ARI table can be independently set by higher layer signaling (e.g., RRC signaling).

The UE, when performing transmission with the new PUCCH format, determines resources to be transmitted with the new PUCCH format based on one table (e.g., Table X) and the ARI value. Moreover, the UE, when performing transmission with the PUCCH format 3, determines resources to be transmitted with the PUCCH format 3 based on another table (e.g., Table Y different from Table X) and the ARI value.

### <Embodiment 2.2>

In Embodiment 2.2, the UE selects a PUCCH format to be used for transmission based on a predetermined method. For example, the UE may determine a format to use according to the method 1 of First Embodiment. In Embodiment 2.2, the UE determines resources corresponding to an ARI with reference to different tables according to the number of detected PDCCHs/EPDCCHs, CCs to be scheduled, kinds of PUCCH formats, or the like.

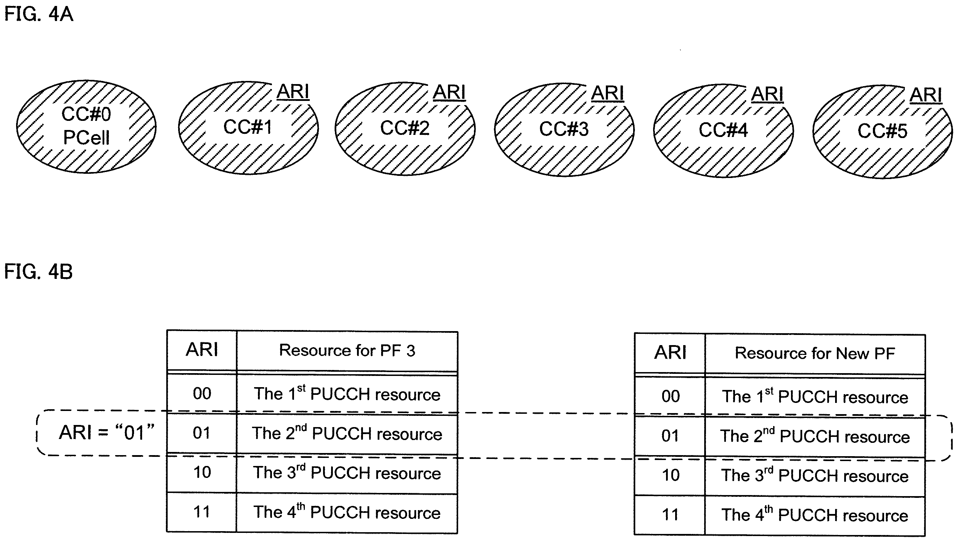

FIG. 4 shows an example of Embodiment 2.2. In this example, as shown in FIG. 4A, the base station configures 6 CCs and performs scheduling on all of CC#0 to CC#5. The UE, when having normally detected the PDCCHs/EPDCCHs corresponding to the respective PDSCHs of CC#0 to CC#5, performs transmission with the new PUCCH format, based on an ARI included in DCI to schedule CC#1 to CC#5, using a PUCCH resource specified by the ARI,.

The table on the left side of FIG. 4B shows a correspondence relationship between PUCCH resources related to the PUCCH format 3 and ARIs (ARI table for the PUCCH format 3), and the table on the right side of FIG. 4B shows a correspondence relationship between PUCCH resources related to the new PUCCH format and ARIs (ARI table for the new PUCCH format). In the respective ARI tables, the PUCCH resources corresponding to the respective ARIs can be set by higher layer signaling. Here, different resources may be even set to the PUCCH resources corresponding to the same ARI in both the ARI tables.

In FIG. 4, the UE, when having normally detected the PDCCHs/EPDCCHs corresponding to 6 CCs, determines that a PUCCH format to use is the new PUCCH format, and performs transmission with the new PUCCH format using the PUCCH resources corresponding to the ARI included in DCI. For example, when an ARI is "01", the UE determines that the PUCCH resource to be transmitted with the new PUCCH format is a second PUCCH resource in the ARI table for the new PUCCH format in FIG. 4B.

In Embodiment 2.2, the UE cannot determine in advance whether to perform transmission with either the PUCCH format 3 or the new PUCCH format. Accordingly, it is desirable for the base station to attempt to detect reception of these resources after reserving the respective resources corresponding to the ARI notified by DCI to the UE in two ARI tables. Moreover, the base station may attempt to detect reception not only with the two resources, but also with the PUCCH resource of the PUCCH format 1a/1b.

As described above, according to Embodiment 2.2, resources of a plurality of PUCCH formats (a format 3 and new format) can be set by separate independent higher layer signaling, thus improving flexibility of setting of the base station (facilitating the scheduling).

### <Embodiment 2.3>

In Embodiment 2.3, DCI to instruct PDSCH includes multiple (e.g., two) ARIs. In this case, the UE can select a PUCCH format for transmission based on any or all of the plurality of ARIs.

For example, when the DCI includes two ARIs (an ARI for new PUCCH format and an ARI for PUCCH format 3), the ARI for the new PUCCH format may be set so that a predetermined value (for example "00") instructs "not to perform transmission with the new PUCCH format". Enabling to instruct not to perform transmission with the new PUCCH format prevents a case where, even though the base station schedules only 5 or less CCs, the terminal falsely detects a PDCCH/EPDCCH that is not actually transmitted and performs transmission with the new PUCCH format.

In other words, when the CCs to be scheduled are 5 or less CCs, the base station instructs "not to perform transmission with the new PUCCH format" by the ARI, thereby eliminating the possibility of transmission with a plurality of PUCCH formats and simplifying the reception processing. In this way, as the ARI for the new PUCCH format and the ARI for the PUCCH format 3, the DCI can include different values.

The base station, when assigning resources for the new PUCCH format to a predetermined UE, sets the ARI for the new PUCCH format to a value corresponding to a resource to be assigned (a value other than the predetermined value (e.g., "00")). In this case, the base station may set the ARI for the PUCCH format 3 to an arbitrary value.

The base station, when assigning resources for the PUCCH format 3 to a predetermined UE, sets the ARI for the PUCCH format 3 to a value corresponding to a resource to be assigned. Moreover, the base station sets the ARI for the new PUCCH format to a predetermined value (e.g., "00").

Also, the base station attempts to detect reception of the resource to be assigned to the predetermined UE. In this case, the base station may not try to detect reception of resources of unassigned format. Moreover, the base station may attempt to detect reception with the PUCCH resources corresponding to the PUCCH format 1a/1b, in addition to the resources assigned to the predetermined UE.

The UE, when having detected DCI to schedule SCell, refers to an ARI for the new PUCCH format and determines whether it is the predetermined value or not. If an ARI for the new PUCCH format that is included in the received DCI is other than the predetermined value (e.g., "00"), the UE performs transmission with the new PUCCH format using the PUCCH resources instructed by the ARI, and if the ARI for the new PUCCH format is the predetermined value, the UE transmits in the PUCCH format 3 using the PUCCH resource instructed by the ARI for the PUCCH format 3.

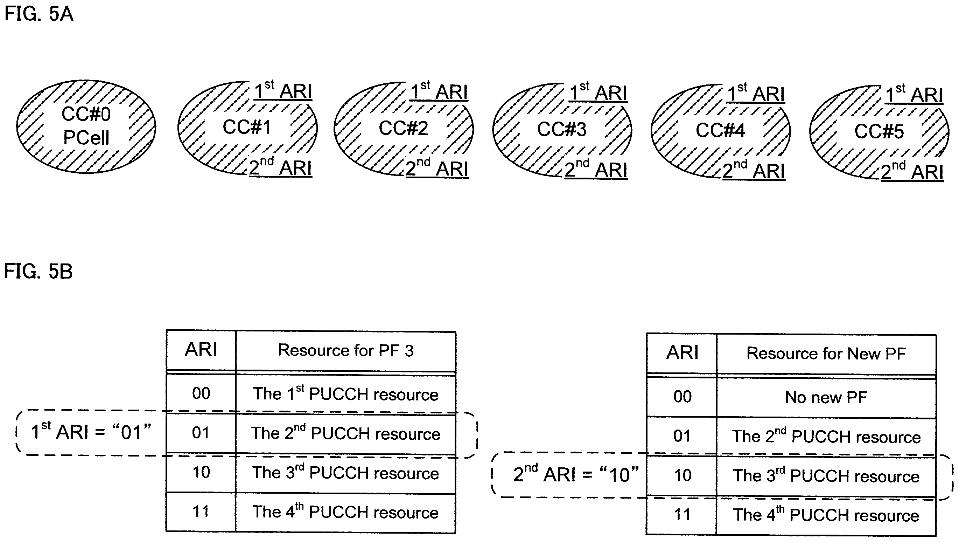

FIG. 5 shows an example of Embodiment 2.3. In this example, as shown in FIG. 5A, the base station configures 6 CCs, and performs scheduling on all of CC#0 to CC#5. Each of DCIs to schedule SCell (CC#1 to CC#5) includes two ARIs. In FIG. 5A, "01" is set as the ARI for PUCCH format 3 (1^{st} ARI), and "10" is set as the ARI for the new PUCCH format (2^{nd} ARI). Note that the ARIs included in the respective DCIs are the same ARI even for different CCs.

The table on the left side of FIG. 5B shows an ARI table for the PUCCH format 3, and the table on the right side of FIG. 5B shows an ARI table for the new PUCCH format. In each of the ARI tables, the PUCCH resources corresponding to each of the ARIs can be set by higher layer signaling. Here, different resources or the same resource may be set for the PUCCH resources corresponding to the same ARI in both the ARI tables.

In FIG. 5B, in the ARI table for the new PUCCH format, ARI = "00" is set to indicate "not to perform transmission with the new PUCCH format", and ARIs except for ARI = "00" are set to indicate the radio resources for the new PUCCH format.

The UE, when having detected DCI to schedule at least one SCell (CC#1 to CC#5), extracts two ARIs included in the DCI. In FIG. 5, since the ARI for the new PUCCH format is "10", the UE performs transmission with the new PUCCH format using the resource corresponding to ARI = "10" of the new PUCCH format (the third PUCCH resource in the ARI table for the new PUCCH format).

As described above, in Embodiment 2.3, the base station can determine in advance whether the UE performs transmission with either the PUCCH format 3 or the new PUCCH format, and therefore may assign only resources to be used by the UE, thus improving frequency utilization efficiency. Moreover, if the UE successfully detects at least one DCI (PDCCH/EPDCCH) including ARI, the UE can use resources specified by the base station.

Note that the example of FIG. 5 shows a configuration in which both ARIs for the new PUCCH format and for the PUCCH format 3 are 2 bits, but is not limited to this. The numbers of bits forming respective two ARIs may be different. For example, the ARI for the PUCCH format 3 may be 2 bits, while the ARI for the new PUCCH format may be 1 bit. By doing this, it is possible to suppress an increase in the amount of information of the DCI and a reduction in the throughput associated therewith.

Moreover, when the ARI for the new PUCCH format is 1 bit, whether or not to perform transmission with the new format may be represented by the 1 bit, the resources for the new format may be determined based on other information. In this case, the resources for the new PUCCH format may be notified by higher layer signaling (e.g., RRC signaling), or may be set in advance.

Moreover, in Embodiment 2.3, in addition to or instead of specifying an ARI corresponding to "not to perform transmission with the new PUCCH format" in the table for the new format, an ARI (e.g., "00") may be specified which corresponds to "not to perform transmission with the PUCCH format 3" in the table for the PUCCH format 3. In this case, upon detecting DCI, the UE refers to the ARI for the PUCCH format 3, and determines whether the ARI is a predetermined value or not. If the ARI for the PUCCH format 3 included in the received DCI is other than the predetermined value (e.g., "00"), the UE may perform transmission with the PUCCH format 3 using PUCCH resources instructed by the ARI, and if the ARI for the PUCCH format 3 is the predetermined value, the UE may perform transmission with the new PUCCH format using PUCCH resources instructed by ARI for the new PUCCH format.

### (Third Embodiment : Method of specifying PUCCH resources by ARI and Total DAI)

The present inventors have further studied for the problem that if a PDCCH/EPDCCH detection failure occurs, there is a possibility that identification of the PUCCH format and the number of A/N bits, etc., is different between the radio base station and the UE. Then, the present inventors have conceived of notifying information available for specifying the number of A/N bits to be fed back to thereby prevent the difference of the identification, and have found out Third and Fourth Embodiments.

In Third Embodiment, as the information available for specifying the number of A/N bits to be fed back, information on the total number of CCs to be scheduled is included in the PDCCH/EPDCCH (e.g., DCI), and is notified. The information on the total number of CCs to be scheduled is, for example, the number of PDSCHs (= the number of A/N bits which the UE should feedback with respect to the period) or the number of CCs to be scheduled to the UE in a predetermined period (e.g., a predetermined sub-frame). The information may be also referred to as, for example, Total DAI (TDAI: Total Downlink Assignment Index), may be simply referred to as DAI, or may be referred to as other names.

For example, the radio base station transmits all PDCCHs/EPDCCHs (regardless of PCell or SCell) used for scheduling of PDSCH with a TDAI included therein. The UE determines the number of A/N bits to be fed back based on the value of TDAI included in the detected PDCCH/EPDCCH, and generates an A/N bit string. Here, when the value of TDAI and the number of PDCCHs/EPDCCHs detected by the UE itself do not match, the UE reports NACK bit strings, the number of which corresponds to the value instructed by TDAI (for example, the length of the bit string = the number indicated by TDAI).

Note that the length of NACK bit string may be determined in consideration of higher layer signaling in addition to the value instructed by TDAI. For example, when the TDAI represents the number of CCs in which the PDSCHs are scheduled, MIMO (Multi Input Multi Output) is set for each CC, and scheduling of 2 TBs (Transport Blocks) per PDSCH is performed, the length of NACK bit string is twice as many the number indicated by TDAI.

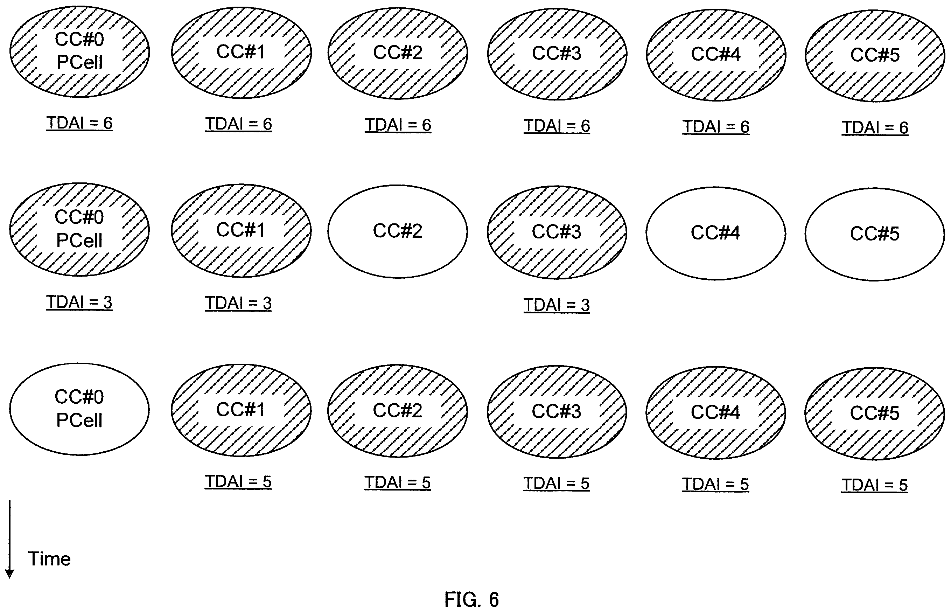

FIG. 6 is a diagram showing an exemplary relationship between the number of scheduled CCs and Total DAI. In this example, the base station configures 6 CCs, and varies the number of CCs to be scheduled to 6, 3, and 5. If the UE detects at least one PDCCH/EPDCCH including TDAI, the UE can properly set the number of A/N bits.

Specifically, when the UE fails to detect any PDCCH/EPDCCH to which the PDSCH is assigned (TDAI > the number of detections), if it is not clear which CC's PDCCH/EPDCCH fails to be detected, NACK of the number of bits corresponding to a value instructed by TDAI is fed back.

Moreover, when the UE falsely detects PDCCH/EPDCCH for an unassigned CC (TDAI < the number of detections), if it is not clear which CC's PDCCH/EPDCCH is falsely detected, NACK of the number of bits corresponding to a value instructed by TDAI is fed back.

As described above, the use of TDAI eliminates the difference of identification in the number of A/N bits between the radio base station and the user terminal, thereby avoiding a NACK-to-ACK error (being falsely identified as ACK even though it is NACK) which causes substantial degradation.

In Third Embodiment, in order to determine PUCCH resources, both the TDAI and the ARI are included in the PDCCH/EPDCCH. Then, if the value of TDAI indicates a predetermined value (for example, a value included in a predetermined range, or a value not more than a predetermined value, etc.), the UE assumes the received ARI as an ARI for the PUCCH format 3, otherwise assumes the received ARI as an ARI for the new PUCCH format.

The UE, when assuming the received ARI as the ARI for the PUCCH format 3, determines PUCCH resources based on the ARI table for the PUCCH format 3, and when assuming it as an ARI for the new PUCCH format, determines PUCCH resources based on the ARI table for the new PUCCH format. Here, as described in Second Embodiment, the ARI table for the PUCCH format 3 and the ARI table for the new PUCCH format may be independently set in the UE, or the same ARI table may be used.

Note that the predetermined value used to determine ARIs may be notified by higher layer signaling (e.g., RRC signaling), DCI and the like, or a combination thereof, or may be set in advance.

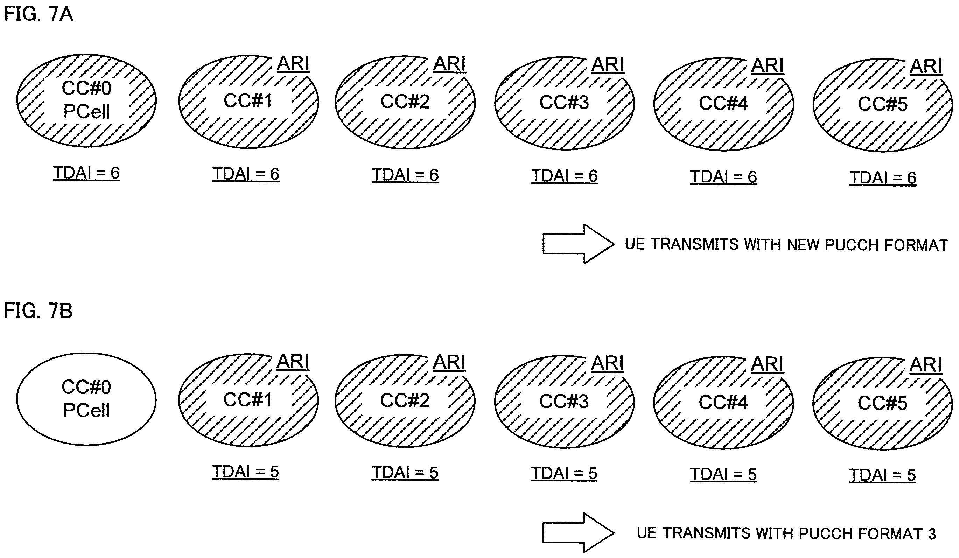

FIG. 7 is a diagram showing an example of Third Embodiment. In this example, the base station configures 6 CCs. In this example, it is assumed that the UE is set to use the new PUCCH format in the case of having 6 or more TDAIs.

In FIG. 7A, the base station performs scheduling on all of CC#0 to CC#5, and PDCCH/EPDCCH corresponding to each scheduling includes "TDAI = 6" indicating the assignment of 6 CCs. Moreover, an ARI is notified with the DCI to schedule SCell (CC#1 to CC#5).

In this case, since the TDAI indicates the assignment corresponding to 6 CCs, the UE determines to perform transmission with the new PUCCH format. In this case, the UE interprets the value of the notified ARI as an ARI for the new PUCCH format, selects a PUCCH resource specified by the ARI based on the ARI table for the new PUCCH format, and transmits HARQ-ACK with the new PUCCH format using the resource.

In FIG. 7B, the base station performs scheduling on CC#1 to CC#5, and PDCCH/EPDCCH corresponding to each scheduling includes "TDAI = 5" indicating the assignment of 5 CCs. Moreover, an ARI is notified with the DCI to schedule SCell.

In this case, since the TDAI indicates the assignment corresponding to 5 CCs, the UE determines to perform transmission with the PUCCH format 3. In this case, the UE interprets the value of the notified ARI as an ARI for the PUCCH format 3, selects using a PUCCH resource specified by the ARI based on the ARI table for the PUCCH format 3, and transmits HARQ-ACK using the resource.

Note that, when the UE fails to detect PDCCH/EPDCCH assigning PDSCH of any of CCs, the value indicated by TDAI does not correspond to the number of PDCCHs/EPDCCHs detected by the UE. In this case, if the value indicated by the TDAI indicates a predetermined value (e.g., a value included in a predetermined range, or a value not more than a predetermined value, etc.), the UE assumes the received ARI as the ARI for the PUCCH format 3, and can transmit NACK bit strings, the number of which corresponds to the value indicated by the TDAI, with the PUCCH format 3, otherwise assumes the received ARI as the ARI for the new PUCCH format, and can transmit NACK bit strings, the number of which corresponds to the value indicated by the TDAI, with the new PUCCH format.

As described above, according to Third Embodiment, the difference of identification in the number of A/N bits and a PUCCH format between the radio base station and the user terminal can be eliminated, and a decrease in throughput can be suppressed.

### (Fourth Embodiment : Method of specifying PUCCH resources by ARI and bitmap)

In Fourth Embodiment, as information available for specifying the number of A/N bits to be fed back, information for specifying CCs to be scheduled is included in the PDCCH/EPDCCH (e.g., DCI), and is notified. The information for specifying CC to be scheduled is, for example, the CC (= CC to which the UE should feedback A/N with respect to the period) in which PDSCHs are scheduled for the UE in a predetermined period (e.g., a predetermined sub-frame) or a bitmap including bits corresponding to PDSCH (also referred to as a bitmap field or bit string). The information may be also referred to as, for example, scheduled CC specifying information, a bitmap indicating the presence or absence of scheduling, and the like, or may be referred to as other names.

For example, the radio base station transmits all PDCCHs/EPDCCHs (regardless of PCell or SCell) used for scheduling of PDSCH with a bitmap included therein. The UE identifies the scheduled CC based on the bitmap included in the detected PDCCH/EPDCCH, accordingly determines the number of A/N bits to be fed back, and generates an A/N bit string. Here, when the number of A/N bits determined using the bitmap (e.g., the number of CCs to be scheduled) and the number of PDCCHs/EPDCCHs detected by the UE itself do not match, the UE reports NACK bit strings, the number of which corresponds to the number of A/N bits determined using the bitmap (for example, the length of bit string = the number of '1' in the bitmap field).

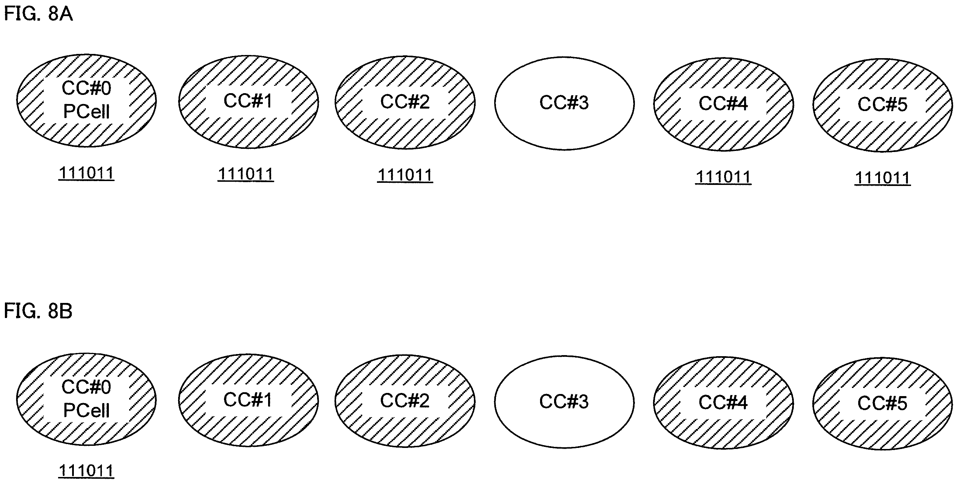

FIG. 8 is a diagram showing an exemplary relationship between the number of scheduled CCs and a bitmap. In this example, the base station configures 6 CCs and performs scheduling on total 5 CCs of CC#0 to CC#2, CC#4 and CC#5. In this case, when it is assumed that '1' indicates a CC to be scheduled, the bitmap of Fourth Embodiment is "111011". In this case, the number of CCs to be scheduled = 5.

FIG. 8A shows an example in which a bitmap is included in all PDCCHs/EPDCCHs for each CC. By doing so, if at least one PDCCH/EPDCCH including a bitmap is detected, the number of A/N bits can be properly set.

FIG. 8B shows an example in which a bitmap indicating the presence or absence of scheduling for each CC assigned by PDCCH/EPDCCH of a specific CC is included in the PDCCH/EPDCCH transmitted and received on the CC. In FIG. 8B, the UE determines scheduling of a plurality of CCs (CC#0 to CC#2, CC#4 and CC#5) according to PDCCH/EPDCCH received in the PCell. In this case, if PDCCH/EPDCCH on the specific CC is detected, the number of A/N bits can be set properly. Note that CC of SCell, not PCell, may be the above specific CC.

Specifically, when the UE fails to detect any PDCCH/EPDCCH to which the PDSCH is assigned (for example, the number of '1' in the bitmap field > the number of detections), the CC that fails to be detected is specified based on the bitmap, the feedback information of the CC is NACK, and ACK/NACK of the number of bits equal to the number of '1' in the bitmap field is fed back.

Moreover, when the UE falsely detects PDCCH/EPDCCH for unassigned CC (for example, the number of '1' in the bitmap field < the number of detections), the falsely detected CC is specified, and when the CC is not scheduled, the feedback information of the CC is not generated, and ACK/NACK of the number of bits equal to the number of '1' in the bitmap field is fed back for each scheduled CC.

As described above, since information on which CC is scheduled is shared between the base station and the UE, by use of the bitmap, the difference of identification in the number of A/N bits between the radio base station and the user terminal can be eliminated, thereby avoiding a NACK-to-ACK error which causes substantial degradation.

In Fourth Embodiment, in order to determine PUCCH resources, both the bitmap and the ARI are included in the PDCCH/EPDCCH. Then, if the bitmap includes a predetermined number of '1' (for example, the number included in a predetermined range, or the number not more than a predetermined value, etc.), the UE assumes the received ARI as an ARI for the PUCCH format 3, otherwise assumes the received ARI as an ARI for the new PUCCH format.

The UE, when assuming the received ARI as an ARI for the PUCCH format 3, determines PUCCH resources based on the ARI table for the PUCCH format 3, and when assuming it as an ARI for the new PUCCH format, determines PUCCH resources based on an ARI table for the new PUCCH format. Here, as described in Second Embodiment, an ARI table for the PUCCH format 3 and an ARI table for the new PUCCH format may be independently set in the UE, or the same ARI table may be used.

Note that the predetermined value used to determine ARIs may be notified by higher layer signaling (e.g., RRC signaling), DCI and the like, or a combination thereof, or may be set in advance. Moreover, ARIs may be determined by comparing the predetermined value with the number of '0', not the number of '1' included in the bitmap.

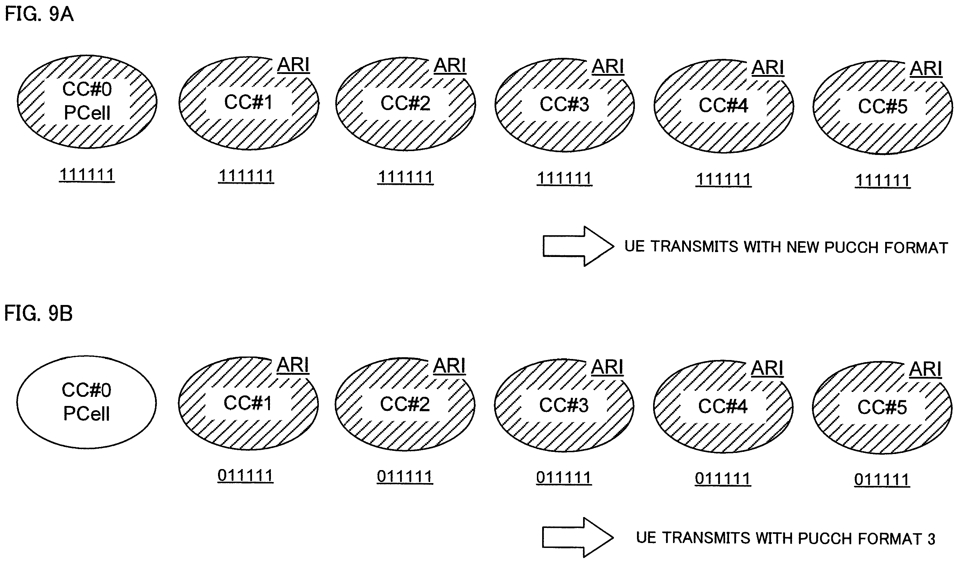

FIG. 9 is a diagram showing an example of Fourth Embodiment. In this example, the base station configures 6 CCs. In this example, when the bitmap includes 6 or more '1', the UE is assumed to be set to use the new PUCCH format.

In FIG. 9A, the base station performs scheduling on all CC#0 to CC#5, and PDCCH/EPDCCH corresponding to each scheduling includes the bitmap = "111111" indicating the assignment of 6 CCs. Moreover, an ARI is notified with the DCI to schedule SCell (CC#1 to CC#5).

In this case, since the bitmap indicates the assignment corresponding to 6 CCs, the UE determines to perform transmission with the new PUCCH format. In this case, the UE interprets the value of the notified ARI as an ARI for the new PUCCH format, selects a PUCCH resource specified by the ARI based on a table for the new PUCCH format, and performs transmission with the new PUCCH format using the resource.

In FIG. 9B, the base station performs scheduling on CC#1 to CC#5, and PDCCH/EPDCCH corresponding to each scheduling includes the bitmap = "011111" indicating the assignment of 5 CCs other than CC#0. Moreover, an ARI is notified with the DCI to schedule SCell (CC#1 to CC#5).

In this case, since the bitmap indicates the assignment corresponding to 5 CCs, the UE determines to perform transmission with the PUCCH format 3. In this case, the UE interprets the value of the notified ARI as an ARI for the PUCCH format 3, selects using a PUCCH resource specified by the ARI based on the table for the PUCCH format 3, and performs transmission using the resource.

As described above, according to Fourth Embodiment, the difference of identification in the number of A/N bits and the PUCCH format between the radio base station and the user terminal can be eliminated, and a decrease in throughput can be suppressed.

### <Modification>

Note that the example described in each of the above-mentioned embodiments is merely an example, but not limited thereto. For example, in each of the above-mentioned embodiments, the method of properly determining PUCCH resources by switching the existing PUCCH format 3 and the new PUCCH format based on physical layer signaling (PDCCH/EPDCCH) or higher layer signaling (RRC) is described, but the PUCCH formats to be switched are not limited to these two.

If a plurality of new PUCCH formats is specified, the present invention may be applied to switching between the plurality of new PUCCH formats, or may be applied to switching among three or more (three or more types of) PUCCH formats, for example, among the existing PUCCH format 3 and the plurality of new PUCCH formats.

Moreover, in Third and Fourth Embodiments, the configuration in which the TDAI or bitmap is included in the physical layer signaling (DCI) is described, but not limited to this. For example, the TDAI and/or bitmap may be included in DL MAC CE (Downlink Medium Access Control Control Element). Specifically, when scheduling is performed on a plurality of DL-CCs, the TDAI and/or bitmap may be included in the MAC CE of all or a part of DL-CCs.

In Third and Fourth Embodiments, information on all CCs to be scheduled (information or bitmaps on the total number of CCs to be scheduled) is included in each PDCCH/EPDCCH, but it is not limited thereto. For example, the PDCCH/EPDCCH on the specific CC may be configured to include the above information on only the CC scheduled from the specific CC (information or bitmaps on the number of CCs to be scheduled).

In this case, information on the number of CCs to be scheduled (for example, the number of CCs corresponding to which CC of all CCs) or information on the configuration of the bitmap (for example, which bit indicates which CC) may be notified by higher layer signaling, DCI or the like, or a combination thereof. The UE can properly set the number of bits of ACK/NACK for some CC groups based on the information.

Moreover, when TDAIs or bitmaps are included in PDCCHs/EPDCCHs of a plurality of CCs, the UE may detect a plurality of PDCCHs/EPDCCHs including different TDAIs or bitmaps, but some of the PDCCHs/EPDCCHs are likely to be falsely detected.

Therefore, when a plurality of TDAIs and/or bitmaps is obtained, the UE may select a TDAI and/or bitmap by any of the following methods, and determine a PUCCH format and/or a PUCCH resource:
(1) select by majority decision (select the most detected TDAI and/or bitmap),
(2) select the TDAI and/or bitmap with the largest number of scheduled CCs (select the largest TDAI and/or the bitmap with the largest number of '1'),
(3) select the TDAI and/or bitmap with the smallest number of scheduled CCs (select the smallest TDAI and/or the bitmap with the smallest number of '1').

This can reduce a possibility that identification of the number of A/N bits, the PUCCH format, the PUCCH resource or the like is different between the radio base station and the UE.

Moreover, even if the CC that receives the predetermined PDSCH and the CC that receives PDCCH/EPDCCH to which the PDSCH is assigned are the same or different (cross carrier scheduling), the methods described in the respective embodiments can be applied.

Also, even when PDCCH/EPDCCH to schedule PDSCH of a plurality of CCs is received on one CC, the methods described in the respective embodiments can be applied.

Note that, although the example of controlling the PUCCH format/PUCCH resource for transmitting HARQ-ACK is described in the above respective embodiments, other signals may be transmitted with the PUCCH format/PUCCH resource to be controlled. Other uplink control signals (UCI: Uplink Control Information) may be transmitted using the PUCCH format/PUCCH resource determined as the PUCCH format/PUCCH resource for transmitting HARQ-ACK. For example, Channel State Information (CSI) such as scheduling request (SR), CQI (Channel Quality Indicator), PMI (Precoding Matrix Indicator), and RI (Rank Indicator) may be transmitted using the new PUCCH format and/or the PUCCH resource for the new PUCCH format. Alternatively, the HARQ-ACK and part or all of the above other uplink control signals may be multiplexed and transmitted with the PUCCH format/PUCCH resource to be controlled.

In Rel.13 CA, as incentives for configuring a large number of CCs, in addition to remarkably increasing terminal throughputs, usage method has been studied which is capable of dynamically switching the carrier to be actually scheduled among a large number of frequency carriers, and flexibly changing the carrier to be used according to the degree of interference or frequency congestion. In order to achieve the former incentive, it is essential to configure and concurrently schedule a large number of CCs, and thus it is necessary to use the new PUCCH format. On the other hand, the latter incentive can be achieved without concurrently scheduling the many CCs.

Accordingly, introduction of terminal capability information (UE capability) indicating that the new PUCCH format can be set allows the terminal implementation, in which the new PUCCH format is not implemented, but UL-CA with a large number of CCs is implemented, to be identified by the base station side. In other words, this omits, on the UE, the implementation that requires the new PUCCH format for achieving higher terminal throughputs, and, only for achieving the latter incentive, allows UL-CA to be implemented. Accordingly, this allows the UL-CA that configures a large number of CCs to be implemented in a simpler implementation to achieve the latter incentive.

Therefore, the radio base station may be configured to set the new PUCCH format (or notify information on whether or not to use the new PUCCH format) to the user terminal that has notified the terminal capability information indicating that the new PUCCH format can be set. For example, the new PUCCH format can be set for the user terminal that has notified both the terminal capability information that the CA with more than 5 CCs can be set and the terminal capability information indicating that the new PUCCH format can be set.

Note that the radio communication methods according to the above respective embodiments and the respective modifications may be applied alone, or may be applied in combination.

### (Radio communication system)

A configuration of radio communication system according to one embodiment of the present invention will be described below. In the radio communication system, the radio communication methods according to the above respective embodiments of the present invention are applied. Note that the radio communication methods according to the above respective embodiments may be applied alone, or may be applied in combination.

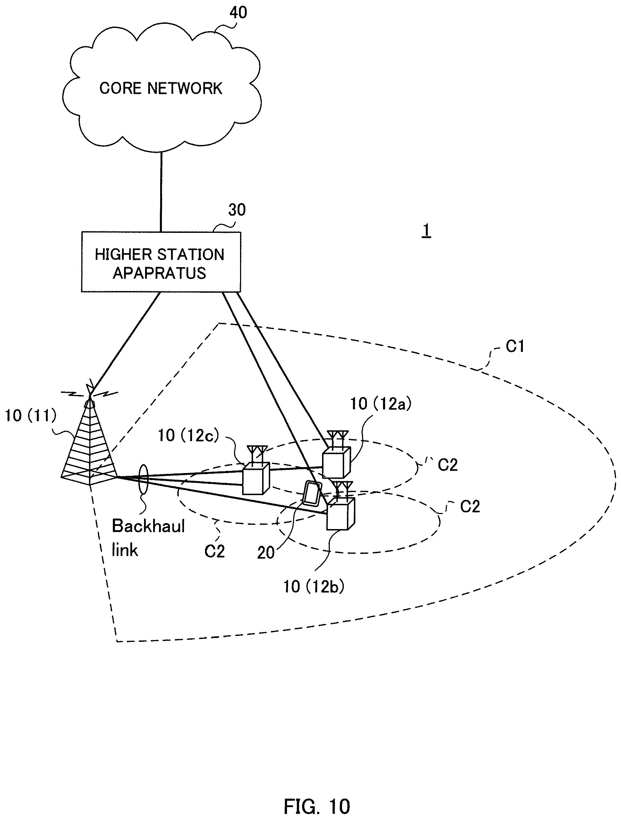

FIG. 10 is a diagram showing an exemplary schematic configuration of a radio communication system according to one embodiment of the present invention. The radio communication system 1 can employ carrier aggregation (CA) and/or dual connectivity (DC) to aggregate a plurality of base frequency blocks (component carriers) with a system bandwidth (e.g., 20 MHz) of a LTE system as one unit. Note that the radio communication system 1 may be referred to as SUPER 3G, LTE-A (LTE-Advanced), IMT-Advanced, 4G, 5G, and FRA (Future Radio Access), etc.

The radio communication system 1 shown in FIG. 10 includes a radio base station 11 that forms a macro cell C1, and radio base stations 12 (12a to 12c) which are disposed in the macro cell C1 and form small cells C2 narrower than the macro cell C1. Also, a user terminal 20 is disposed in the macro cell C1 and each small cell C2.

The user terminal 20 can connect with both the radio base station 11 and the radio base station 12. It is conceived that the user terminal 20 concurrently uses the macro cell C1 and small cell C2 by CA or DC. Moreover, the user terminal 20 can employ CA or DC using a plurality of cells (CC) (e.g., 6 or more CCs).

Between the user terminal 20 and the radio base station 11, communication is carried out using a carrier in a relatively low frequency band (e.g., 2 GHz) and with a narrow bandwidth (referred to as, for example, existing carrier or legacy carrier). Meanwhile, between the user terminal 20 and the radio base station 12, a carrier in a relatively high frequency band (for example, 3.5 GHz, 5 GHz etc.) and with a wide bandwidth may be used, or the same carrier as that used in the radio base station 11 may be used. Note that the configuration of the frequency band used by each radio base station is not limited to this.

The connection between the radio base station 11 and the radio base station 12 (or between two radio base stations 12) can be wired connection (e.g., optical fiber, X2 interface and the like complying with CPRI (Common Public Radio Interface)) or wireless connection.

The radio base station 11 and the radio base stations 12 are each connected with a higher station apparatus 30, and are connected with a core network 40 via the higher station apparatus 30. Note that the higher station apparatus 30 includes, but not limited to, for example, an access gateway device, a radio network controller (RNC), a mobility management entity (MME) and the like. Moreover, each radio base station 12 may be connected with the higher station apparatus 30 via the radio base station 11.

Note that the radio base station 11 is a radio base station having a relatively wide coverage, and may be referred to as a macro base station, an aggregate node, an eNB (eNodeB), a transmission/reception point and the like. Also, the radio base station 12 is a radio base station having a local coverage, and may be referred to as a small base station, a micro base station, a pico base station, a Femto base station, an HeNB (Home eNodeB), an RRH (Remote Radio Head), a transmission/reception point, and the like. Hereinafter, in the case of not distinguishing between the radio base stations 11 and 12, each of the stations is collectively called a radio base station 10.

Each user terminal 20 is a terminal supporting various types of communication schemes such as LTE and LTE-A, and may include a fixed communication terminal as well as the mobile communication terminal.

In the radio communication system 1, as radio access schemes, OFDMA (Orthogonal Frequency Division Multiple Access) is applied on downlink, while SC-FDMA (Single Carrier-Frequency Division Multiple Access) is applied on uplink. OFDMA is a multicarrier transmission scheme for dividing a frequency band into a plurality of narrow frequency bands (subcarriers), and mapping data to each subcarrier to perform communication. SC-FDMA is a single-carrier transmission scheme for dividing a system bandwidth into bands comprised of a single or contiguous resource blocks for each terminal so that a plurality of terminals uses mutually different bands, and thereby reducing interference among terminals. Note that the uplink and downlink radio access schemes are not limited to a combination thereof.

In the radio communication system 1, a downlink shared channel (PDSCH: Physical Downlink Shared Channel), which is shared by each user terminal 20, a broadcast channel (PBCH: Physical Broadcast Channel), a downlink L1/L2 control channel and the like are used as downlink channels. User data and higher layer control information, SIB (System Information Block) and the like are transmitted on the PDSCH. Moreover, MIB (Master Information Block) is transmitted on the PBCH.

The downlink L1/L2 control channel includes PDCCH (Physical Downlink Control Channel), EPDCCH (Enhanced Physical Downlink Control Channel), PCFICH (Physical Control Format Indicator Channel), PHICH (Physical Hybrid-ARQ Indicator Channel), and the like. The downlink control information (DCI: Downlink Control Information) including scheduling information of the PDSCH and PUSCH and the like are transmitted on the PDCCH. The number of OFDM symbols used in the PDCCH is transmitted on the PCFICH. The receipt confirmation signal (ACK/NACK) of HARQ for PUSCH is transmitted on the PHICH. The EPDCCH is frequency division multiplexed with the PDSCH (downlink shared data channel), and used for transmission of the DCI and the like, similarly to the PDCCH.

In the radio communication system 1, an uplink shared channel (PUSCH: Physical Uplink Shared Channel) that is shared by each user terminal 20, an uplink control channel (PUCCH: Physical Uplink Control Channel), a random access channel (PRACH: Physical Random Access Channel) and the like are used as uplink channels. User data and higher layer control information are transmitted on the PUSCH. Moreover, downlink radio quality information (CQI: Channel Quality Indicator), a receipt confirmation signal (ACK/NACK) and the like are transmitted on the PUCCH. A random access preamble to establish connection with a cell is transmitted on the PRACH.

In the radio communication system 1, a Cell-specific Reference Signal (CRS), a Channel State Information-Reference Signal (CSI-RS), a DeModulation Reference Signal (DMRS) and the like are transmitted as downlink reference signals. Moreover, in the radio communication system 1, a Sounding Reference Signal (SRS), a DeModulation Reference Signal (DMRS) and the like are transmitted as uplink reference signals. Note that the DMRS may be referred to as a user terminal specific reference signal (UE-specific Reference Signal). Moreover, transmitted reference signals are not limited to these.

### <Radio base station>

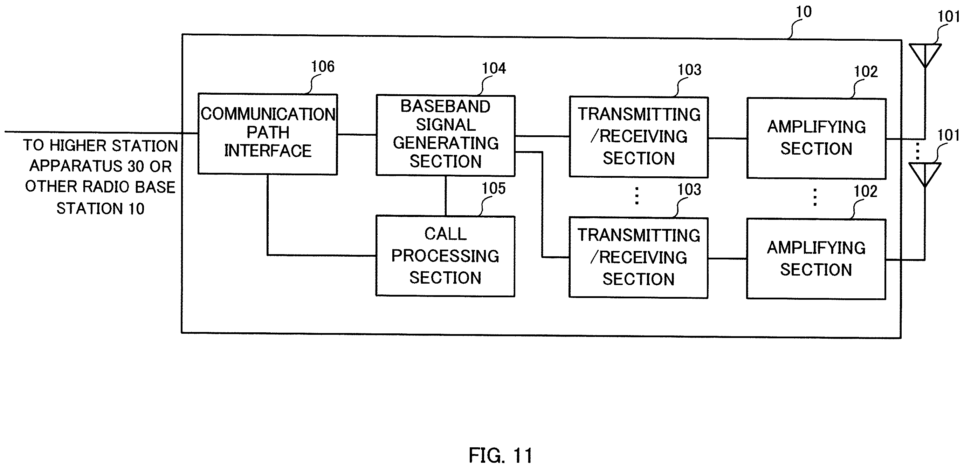

FIG. 11 is a diagram showing an exemplary overall configuration of the radio base station according to one embodiment of the present invention. The radio base station 10 includes a plurality of transmission/reception antennas 101, amplifying sections 102, transmission/reception sections 103, a baseband signal processing section 104, a call processing section 105, and a transmission path interface 106. Note that the radio base station 10 may be configured to include the one or more transmission/reception antennas 101, one or more amplifying sections 102, and one or more transmission/reception sections 103, respectively.

User data to be transmitted from the radio base station 10 to the user terminal 20 on downlink is input to the baseband signal processing section 104 from the higher station apparatus 30 via the transmission path interface 106.

The baseband signal processing section 104 performs, on user data, transmission processing, such as processing of PDCP (Packet Data Convergence Protocol) layer, segmentation and concatenation of the user data, transmission processing of RLC (Radio Link Control) layer such as RLC retransmission control, MAC (Medium Access Control) retransmission control (for example, transmission processing of HARQ (Hybrid Automatic Repeat reQuest)), scheduling, transport format selection, channel coding, Inverse Fast Fourier Transform (IFFT) processing, and precoding processing, to transfer the user data to each of the transmission/reception sections 103. Moreover, the baseband signal processing section 104 performs, also on downlink control signals, transmission processing, such as such as channel coding and Inverse Fast Fourier Transform to transfer the downlink control signals to each of the transmission/reception sections 103.

Each of the transmission/reception sections 103 converts the baseband signal, which is subjected to precoding for each antenna and is output from the baseband signal processing section 104, into a signal with a radio frequency band and transmits the signal. The amplifying sections 102 amplify the radio frequency signal subjected to frequency conversion in the transmission/reception sections 103, and transmit the signal from the transmission/reception antennas 101. The transmission/reception sections 103 can be configured with a transmitter/receiver, a transmission/reception circuit or a transmission/reception device described on the basis of common recognition in the technical field according to the present invention. Note that the transmission/reception sections 103 may be configured as an integrated transmission/reception section, or may be configured with a transmission section and a reception section.

On the other hand, as for uplink signals, radio frequency signals that are received by the transmission/reception antennas 101 are amplified in the amplifying sections 102. The transmission/reception sections 103 receive uplink signals amplified in the amplifying sections 102. Each of the transmission/reception sections 103 frequency-converts the received signals into baseband signals, and outputs the signals to the baseband signal processing section 104.

The baseband signal processing section 104 performs, on user data included in the input uplink signal, Fast Fourier Transform (FFT) processing, Inverse Discrete Fourier Transform (IDFT) processing, error correction decoding, reception processing of MAC retransmission control, and reception processing of RLC layer and PDCP layer, to transfer the user data to the higher station apparatus 30 via the transmission path interface 106. The call processing section 105 performs call processing such as setting and release of a communication channel, state management of the radio base station 10, and management of radio resources.

The transmission path interface 106 transmits and receives signals to and from the higher station apparatus 30 via a predetermined interface. Moreover, the transmission path interface 106 may transmit and receive signals to and from another radio base station 10 (backhaul signaling) via an inter-base station interface (for example, optical fiber, X2 interface complying with CPRI (Common Public Radio Interface)).

Note that the transmission/reception sections 103 transmit instruction information (DCI) of a reception of a downlink shared channel for a predetermined CC to the user terminal 20. The instruction information may be also referred as DL assignment (Downlink assignment) or scheduling information. Moreover, the DCI may include one or more ARIs, TDAIs, bitmaps including bits corresponding to a scheduled CC, and the like. Moreover, the transmission/reception sections 103 may transmit information on an ARI table (ARI table for the PUCCH format 3 or ARI table for the new PUCCH format).

Moreover, the transmission/reception sections 103 receive HARQ-ACK transmitted with a predetermined PUCCH format from the user terminal 20. The predetermined PUCCH format includes a new PUCCH format having a larger number of transmittable bits than the existing PUCCH format (e.g., PUCCH format 1a/1b, or PUCCH format 3).

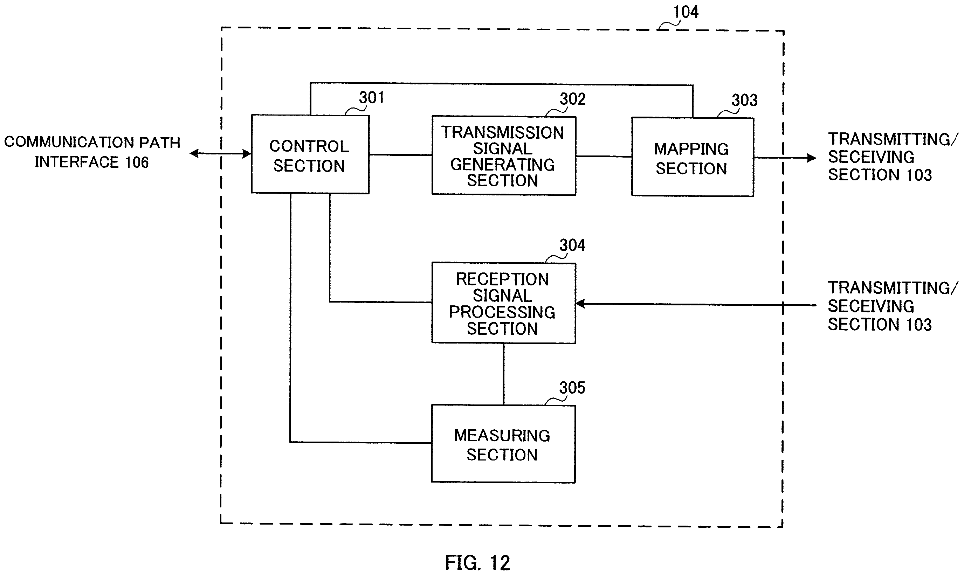

FIG. 12 is a diagram showing an exemplary function configuration of the radio base station according to this embodiment. Note that FIG. 12 mainly illustrates functional blocks of a characteristic portion in this embodiment, and it is assumed that the radio base station 10 also has other functional blocks required for radio communication. As shown in FIG. 12, the baseband signal processing section 104 includes at least a control section (scheduler) 301, a transmission signal generating section 302, a mapping section 303, a received signal processing section 304, and a measurement section 305.

The control section (scheduler) 301 executes control of the entire radio base station 10. The control section 301 can be configured with a controller, a control circuit or a control device described on the basis of common recognition in the technical field according to the present invention.

The control section 301 controls, for example, signal generation by the transmission signal generating section 302 and signal assignment by the mapping section 303. Also, the control section 301 controls signal reception processing by the received signal processing section 304 and signal measurement by the measurement section 305.

The control section 301 controls the scheduling of system information, a downlink data signal transmitted on the PDSCH, and a downlink control signal transmitted on the PDCCH and/or EPDCCH (e.g., resource assignment). Moreover, the control section 301 controls scheduling of a Synchronization signal (PSS (Primary Synchronization Signal)/SSS (Secondary Synchronization Signal)) and downlink reference signals such as a CRS, CSI-RS, and DMRS.

Moreover, the control section 301 controls the scheduling of an uplink data signal transmitted on the PUSCH, an uplink control signal transmitted on the PUCCH and/or PUSCH (e.g., receipt confirmation signal (HARQ-ACK)), a random access preamble transmitted on the PRACH, an uplink reference signal and the like.

Specifically, the control section 301 controls the scheduling of the PDSCH of a plurality of CCs, and controls the transmission signal generating section 302 and the mapping section 303 so as to transmit instruction information (DCI) for instructing radio resources used on each PDSCH, to a predetermined user terminal 20 on the PDCCH/EPDCCH.

Moreover, the control section 301 controls (secures) PUCCH resources used by the user terminal 20. For example, the control section 301 controls (secures) PUCCH resources for HARQ-ACK that can be used by a predetermined user terminal 20 in response to a reception of the PDSCH. The control section 301 may control to include an ARI corresponding to the PUCCH resource in the DCI for scheduling of SCell. Moreover, the control section 301 controls the received signal processing section 304 so as to monitor the PUCCH resource at timing of feedback.

Here, the control section 301 may determine a PUCCH resource for the new PUCCH format based on the same ARI table as other PUCCH formats (Embodiment 2.1), or may determine based on different ARI table (Embodiments 2.2, 2.3). The control section 301, when using a plurality of ARI tables, may include ARIs for each ARI table in DCIs, respectively (Embodiment 2.3). In this case, since it is possible to specify, to the user terminal 20, the PUCCH format used for feedback of HARQ-ACK by the ARI, the control section 301 may control to monitor only the PUCCH resources (and/or PUCCH resources for PUCCH format 1a/1b) used in the PUCCH format.

Moreover, the control section 301 may control to include a bitmap including bits corresponding to TDAIs and/or scheduled CCs in each DCI for scheduling (Third and Fourth Embodiments).

Moreover, the control section 301 may control to transmit information on one or more ARI tables (for example, an ARI table for the PUCCH format 3, and an ARI table for the new PUCCH format) to the user terminal 20 by higher layer signaling (e.g., RRC signaling).

The control section 301, when having acquired HARQ-ACK from the user terminal 20 from the received signal processing section 304, determines whether or not retransmission for the user terminal 20 is required, and, if required, controls to perform retransmission processing.

The transmission signal generating section 302 generates, based on the instruction from the control section 301, a downlink signal (a downlink control signal, a downlink data signal, a downlink reference signal, or the like) to output the downlink signal to the mapping section 303. The transmission signal generating section 302 can be configured with a signal generator, a signal generating circuit or a signal generating device described on the basis of common recognition of the technical field according to the present invention.

The transmission signal generating section 302 generates, for example, based on the instruction from the control section 301, a DL assignment, which notifies downlink signal assignment information, and a UL grant, which notifies uplink signal assignment information. Moreover, the downlink data signal is subjected to coding processing and modulation processing according to a code rate and a modulation scheme determined based on CSI (Channel State Information) from each user terminal 20 and the like.

The mapping section 303 maps, based on the instruction from the control section 301, a downlink signal generated in the transmission signal generating section 302 to a predetermined radio resource to output the signal to the transmission/reception sections 103. The mapping section 303 can be configured with a mapper, a mapping circuit or a mapping device described on the basis of common recognition in the technical field according to the present invention.

The received signal processing section 304 performs reception processing (for example, demapping, demodulation, decoding or the like) on the received signal input from the transmission/reception sections 103. Here, the received signal may be, for example, an uplink signal transmitted from the user terminal 20 (uplink control signal, uplink data signal, uplink reference signal or the like). The received signal processing section 304 can be configured with a signal processor, a signal processing circuit or a signal processing device described on the basis of common recognition in the technical field according to the present invention.

The received signal processing section 304 outputs information decoded through the reception processing to the control section 301. For example, the received signal processing section 304, when having received a PUCCH including HARQ-ACK, outputs HARQ-ACK to the control section 301. Moreover, the received signal processing section 304 outputs the received signal and the signal after reception processing to the measurement section 305.

The measurement section 305 executes measurement on the received signal. The measurement section 305 can be configured with a measure, a measurement circuit or a measurement device described on the basis of common recognition in the technical field according to the present invention.

The measurement section 305 may measure, for example, the received power (e.g., RSRP (Reference Signal Received Power)) and the reception quality (e.g., RSRQ (Reference Signal Received Quality)) of the received signal, channel state and the like. The measurement result may be output to the control section 301.

### <User terminal>

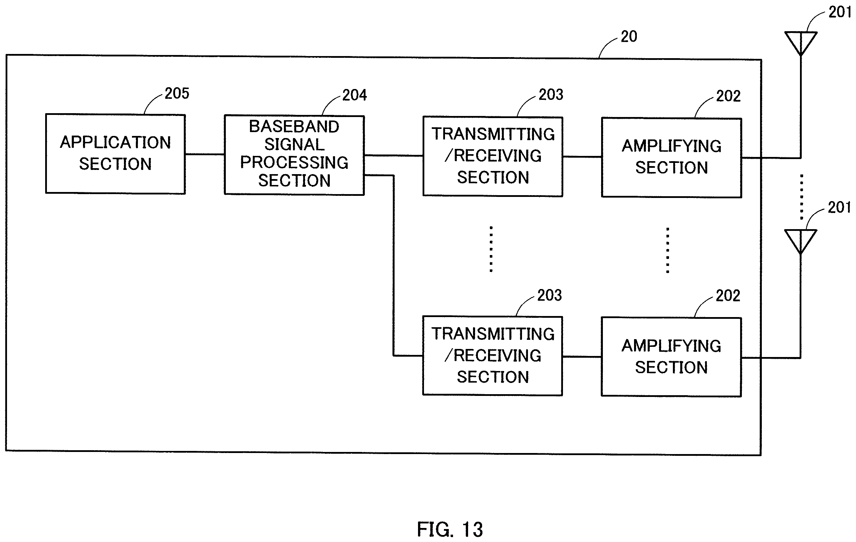

FIG. 13 is a diagram showing an exemplary overall configuration of the user terminal according to this embodiment. The user terminal 20 includes a plurality of transmission/reception antennas 201, amplifying sections 202, transmission/reception sections 203, a baseband signal processing section 204, and an application section 205. Note that the user terminal 20 may be configured to include one or more transmission/reception antennas 201, one or more amplifying sections 202, and one or more transmission/reception sections 203.

The radio frequency signals received by the transmission/reception antennas 201 are amplified in the amplifying sections 202. The transmission/reception sections 203 receive the downlink signal amplified in the amplifying sections 202. Each of the transmission/reception sections 203 frequency-converts the received signal into a baseband signal, and outputs it to the baseband signal processing section 204. The transmission/reception sections 203 can be configured with a transmitter/receiver, a transmission/reception circuit or a transmission/reception device described on the basis of common recognition in the technical field according to the present invention. Note that the transmission/reception sections 203 may be configured as an integrated transmission/reception section, or may be configured with a transmission section and a reception section.

The baseband signal processing section 204 performs FFT processing, error correction decoding, or reception processing of retransmission control, etc., on the input baseband signal. Downlink user data is transferred to the application section 205. The application section 205 performs processing concerning layers higher than physical layer and MAC layer, and the like. Moreover, in the downlink data, broadcast information is also transferred to the application section 205.

On the other hand, for uplink user data, the data is input to the baseband signal processing section 204 from the application section 205. The baseband signal processing section 204 performs transmission processing of retransmission control (for example, transmission processing of HARQ), channel coding, precoding, DFT (Discrete Fourier Transform) processing, IFFT processing and the like on the user data to transfer it to each of the transmission/reception sections 203. Each of the transmission/reception sections 203 converts the baseband signal output from the baseband signal processing section 204 into a signal with a radio frequency band to transmit the signal. Each of the amplifying sections 202 amplifies the radio frequency signal frequency-converted in the transmission/reception sections 203 to transmit the signal from respective one of the transmission/reception antennas 201.

Note that the transmission/reception sections 203 receive instruction information (DCI) of reception of downlink shared channel for the predetermined CC from the radio base station 10. Moreover, the DCI may include one or more ARIs, TDAIs, bitmaps including bits corresponding to scheduled CCs, or the like. Moreover, the transmission/reception sections 203 may receive information on ARI tables (ARI table for the PUCCH format 3, and ARI table for the new PUCCH format).

Moreover, the transmission/reception sections 203 transmit HARQ-ACK to the radio base station 10 using the predetermined PUCCH format. The predetermined PUCCH format includes a new PUCCH format having a larger number of transmittable bits than the existing PUCCH format (e.g., PUCCH format 1a/1b, PUCCH format 3).

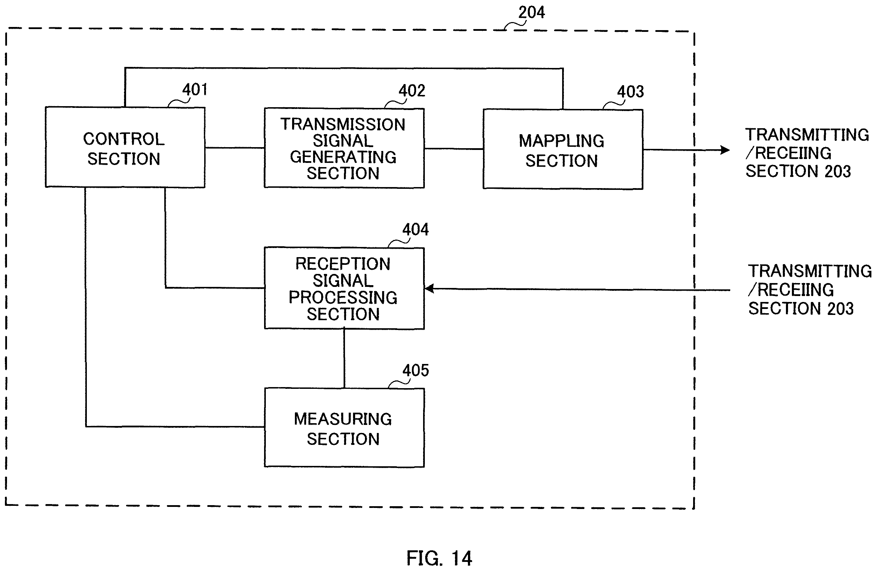

FIG. 14 is a diagram showing an exemplary function configuration of a user terminal according to this embodiment. Note that FIG. 14 mainly illustrates functional blocks of a characteristic portion in this embodiment, and it is assumed that the user terminal 20 also has other functional block required for radio communication. As shown in FIG. 14, the baseband signal processing section 204, which the user terminal 20 has, includes at least control section 401, a transmission signal generating section 402, a mapping section 403, a received signal processing section 404, and a measurement section 405.

The control section 401 executes control of the entire user terminal 20. The control section 401 can be configured with a controller, a control circuit or a control device described on the basis of common recognition in the technical field according to the present invention.

The control section 401 controls, for example, signal generation by the transmission signal generating section 402, and signal assignment by the mapping section 403. Also, the control section 401 controls signal reception processing by the received signal processing section 404 and signal measurement by the measurement section 405.

The control section 401 acquires a downlink control signal (signal transmitted on the PDCCH/EPDCCH) and a downlink data signal (signal transmitted on the PDSCH) transmitted from the radio base station 10 from the received signal processing section 404. The control section 401 controls, generation of an uplink control signal (for example, receipt confirmation signal (HARQ-ACK) and the like) or uplink data signal based on the downlink control signal, the result of determining whether retransmission control for the downlink data signal is necessary or not, and the like.

Specifically, the control section 401, when having acquired instruction information (DCI) to schedule PDSCH, controls the received signal processing section 404 to perform reception processing of PDSCH instructed at a predetermined timing, and controls the transmission signal generating section 402 and the mapping section 403 to transmit, with the predetermined PUCCH format and predetermined PUCCH resource, HARQ-ACK indicating whether or not the reception of the PDSCH has been successful.

The control section 401 determines a predetermined PUCCH format used for transmission of the HARQ-ACK. The control section 401 may determine the PUCCH format based on the number of PDCCHs/EPDCCHs to which the PDSCHs are assigned (Embodiment 1.1), based on CC number of the CC to which the PDSCH is assigned (Embodiment 1.2), based on the number of CCs configured by higher layer signaling (Embodiment 1.3), or based on ARI included in the DCI (Embodiment 2.3).

The control section 401 determines a predetermined PUCCH resource used for transmission of the HARQ-ACK. The control section 401, when having determined to use the new PUCCH format, determines a PUCCH resource for the new PUCCH format based on ARI included in the DCI to schedule SCell and a predetermined ARI table.

Here, the control section 401 may determine a PUCCH resource for new PUCCH format based on the same ARI table as other PUCCH formats (Embodiment 2.1), or may determine based on different ARI tables (Embodiments 2.2, 2.3).

The control section 401 may interpret ARI included in the received DCI as ARI for the new PUCCH format when using the new PUCCH format (Embodiment 2.1). Moreover, the control section 401 may interpret ARI included in the received DCI as ARI for the new PUCCH format according to the number of the detected PDCCHs/EPDCCHs, the CCs to be scheduled, the type of PUCCH format to be used (Embodiment 2.2).

Moreover, when the received DCI includes a plurality of ARIs (for example, ARI for the PUCCH format 3 and ARI for the new PUCCH format), the control section 401 may interpret one ARI as an ARI for the new PUCCH format (Embodiment 2.3).

For example, when the ARI for the new PUCCH format is not a predetermined value, the control section 401 may determine the PUCCH resource for the new PUCCH format using the ARI, and when the ARI for the new PUCCH format is the predetermined value, may determine the PUCCH resource for the PUCCH format 3 using the ARI for the PUCCH format 3. Note that, reference "whether the ARI is a predetermined value or not" may be reversed.

Moreover, when the received DCI includes TDAI and/or bitmap (bit string) including bit corresponding to the scheduled CC, based on at least one thereof, the control section 401 may determine whether or not the ARI included in the received DCI is an ARI for the new PUCCH format, and may determine a resource for the new PUCCH format (Third and Fourth Embodiments).

For example, when the TDAI is a predetermined value, the control section 401 may determine a PUCCH resource for the new PUCCH format using the ARI, and when the TDAI is not the predetermined value, may determine a PUCCH resource for the PUCCH format 3 using the ARI for the PUCCH format 3. Note that reference "whether the TDAI is the predetermined value or not" may be reversed, or the term "a predetermined value" may be a term "a value within a predetermined range".

For example, when the bitmap includes more than a predetermined number of '1's, the control section 401 may determine a PUCCH resource for the new PUCCH format using the ARI, and when the bitmap includes no more than the predetermined number of '1's, may determine a PUCCH resource for the PUCCH format 3 using the ARI for the PUCCH format 3. Note that the term "more than /no more than a predetermined number" may be reversed, the term "more than" may be a term "no less than", or the term "no more than" may be "less than".

Moreover, when information on one or more ARI tables (for example, ARI table for the PUCCH format 3, ARI table for the new PUCCH format) are input from the received signal processing section 404, the control section 401 may update the content of the corresponding ARI table.

The transmission signal generating section 402 generates an uplink signal (uplink control signal, uplink data signal, uplink reference signal, or the like) based on instruction from the control section 401, and outputs the uplink signal to the mapping section 403. The transmission signal generating section 402 can be configured with a signal generator, a signal generating circuit or a signal generating device described on the basis of common recognition in the technical field according to the present invention.

The transmission signal generating section 402 generates a receipt confirmation signal (HARQ-ACK) and an uplink control signal related to Channel State Information (CSI), for example, based on instruction from the control section 401. Moreover, the transmission signal generating section 402 generates an uplink data signal based on instruction from the control section 401. For example, when the downlink control signal notified from the radio base station 10 includes a UL grant, the transmission signal generating section 402 is instructed to generate an uplink data signal by the control section 401.

The mapping section 403 maps the uplink signal generated in the transmission signal generating section 402 to the radio resource, based on instruction from the control section 401, and outputs it to the transmission/reception sections 203. The mapping section 403 can be configured with a mapper, a mapping circuit or a mapping device described on the basis of common recognition in the technical field according to the present invention.

The received signal processing section 404 performs reception processing (for example, demapping, demodulation, decoding, etc.) on the received signal input from the transmission/reception sections 203. Here, the received signal may be, for example, downlink signal transmitted from the radio base station 10 (a downlink control signal, a downlink data signal, a downlink reference signal, etc.). The received signal processing section 404 can be configured with a signal processor, a signal processing circuit or a signal processing device described on the basis of common recognition in the technical field according to the present invention. Moreover, the received signal processing section 404 can constitute the reception section according to the present invention.

The received signal processing section 404 outputs information decoded through reception processing to the control section 401. The received signal processing section 404 outputs, for example, broadcast information, system information, RRC signaling, DCI and the like to the control section 401. Moreover, the received signal processing section 404 outputs the received signal and the signal after reception processing to the measurement section 405.

The measurement section 405 executes measurement on the received signal. The measurement section 405 can be configured with a measure, a measurement circuit or a measurement device described on the basis of common recognition in the technical field according to the present invention.

The measurement section 405 may measure, for example, the received power (e.g., RSRP) and the reception quality (e.g., RSRQ) of the received signal, or the channel state. The measurement result may be output to the control section 401.

Note that the block diagrams used in the description of the above embodiment indicates blocks of the function units. These functional blocks (units) are realized by an arbitrary combination of hardware and software. Moreover, there are no specific limitations on a measure for realizing the functional blocks. That is, the functional blocks may be realized by a physically combined device, or may be realized by two or more physically separated devices which are connected in a wired or wireless manner.

For example, some or all of the functions of the radio base station 10 and the user terminal 20 can be realized by using hardware such as ASIC (Application Specific Integrated Circuit), PLD (Programmable Logic Device), or FPGA (Field Programmable Gate Array). Moreover, the radio base station 10 and the user terminal 20 can be realized by a computer device including a processor (CPU: Central Processing Unit), communication interface for network connection, a memory, and a computer readable storage medium holding programs. That is, the radio base station, the user terminal and the like according to one embodiment of the present invention may function as a computer that performs processing of the radio communication method according to the present invention.

Here, the processor, memory, and the like are connected by a bus for communicating information. Moreover, the computer readable recording medium may be, for example, storage medium such as a flexible disk, a magneto-optical disk, a ROM (Read Only Memory), an EPROM (Erasable Programmable ROM), a CD-ROM (Compact Disc-ROM), a RAM (Random Access Memory), a hard disk. Moreover, the program may be transmitted from the network via an electric communication line. Moreover, the radio base station 10 and the user terminal 20 may include an input device such as an input key and an output device such as display.

The function configuration of the radio base station 10 and the user terminal 20 may be realized by the above-described hardware or may be realized by software modules that are executed by the processor or may be realized by a combination of the two. The processor operates the operating system to control the entire user terminal. Moreover, the processor reads program, software modules and data from the storage medium to the memory, and executes various processing according to these.

Here, the program may be a program that causes a computer to execute the operations described in the above respective embodiments. For example, the control section 401 of the user terminal 20 may be realized by a control program that is stored in the memory and operates with the processor, and other functional blocks may be realized in the same manner.

Moreover, software, command and the like may be transmitted and received via a transmission medium. For example, when the software is transmitted from website, server, or other remote sources by using wire technologies such as coaxial cable optical fiber cable, twisted pair and digital subscriber line (DSL) and/or wireless technologies such as infrared, radio and microwave, these wire technologies and/or wireless technologies are included within the definition of the transmission medium.

Note that the terms described in the Description and/or the terms required to understand the Description may be replaced by terms having the same or similar meanings. For example, the channel and/or symbol may be a signal (signaling). Moreover, the signal may be a message. Moreover, the component carrier (CC) may be referred to as carrier frequency, cell, and the like.

Moreover, the information, parameter and the like described in the Description may be expressed by the absolute value, may be expressed by the relative value from the predetermined value, or may be expressed by another corresponding information. For example, the radio resource may be indicated by an index.

The information, signals, etc., described in the Description may be represented using any of a variety of different technologies. For example, data, instructions, commands, information, signals, bits, symbols, chip, etc., that may be mentioned throughout the above description may be represented by voltages, currents, electromagnetic waves, magnetic fields or particles, optical fields or photons, or a combination thereof.

The respective aspects/embodiments described in the Description may be used singly or in combination, or may be used by being switched according to the execution. Moreover, the notification of a predetermined information (for example, a notification of "being X") is not limited to being performed explicitly, but may be performed implicitly (for example, by not performing the notification of the predetermined information).

The notification of information is not limited to the aspects/embodiments described in the Description, but may be performed in other ways. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (MIB (Master Information Block), SIB (System Information Block))), other signals or a combination thereof. Moreover, RRC signaling may be referred to as an RRC message, for example, RRC connection setup (RRCConnectionSetup) message, RRC connection reconfiguration (RRCConnectionReconfiguration) message, or the like.

The respective aspects /embodiments described in the Description may be applied to systems using LTE (Long Term Evolution), LTE-A (LTE-Advanced), SUPER 3G, IMT-Advanced, 4G, 5G, FRA (Future Radio Access), CDMA2000, UMB (Ultra Mobile Broadband), IEEE 802.11 (Wi-Fi), IEEE 802.16 (WiMAX), IEEE 802.20, UWB (Ultra-WideBand), Bluetooth (Registered Trademark), and other proper system and/or the next-generation system extended based thereon.

The order of processes, sequences, flowcharts and the like in the respective aspects/embodiment as described in the Description may be permuted, as long as there is no inconsistency. For example, in the method described in the Description, the elements of the various steps are presented in the exemplary order and are not limited to the specific order presented.

Although the present invention has been described above in detail, it should be obvious to a person skilled in the art that the present invention is by no means limited to Embodiment described in the Description. The present invention can be implemented with various corrections and in various modifications, without departing from the spirit and scope of the present invention defined by the recitations of claims. Consequently, the descriptions in the Description is only provided for the purpose of illustrating examples, and should by no means be construed to limit the present invention in any way.

The present application is based on Japanese Patent Application No. 2015-128736 filed on Jun. 26, 2015, the entire content of which are expressly incorporated by reference herein.

## Claims

1. A user terminal comprising:
a reception section that detects instruction information of a reception of a downlink shared channel on a downlink control channel;
a transmission section that transmits uplink control information on the reception of the downlink shared channel corresponding to the instruction information; and
a control section that determines a PUCCH format for transmitting the uplink control information from a plurality of PUCCH formats including a large-capacity PUCCH format having a larger capacity than PUCCH (Physical Uplink Control Channel) format 3,
wherein the control section determines a PUCCH resource for transmission with the large-capacity PUCCH format based on the instruction information.

2. The user terminal according to claim 1, wherein
the instruction information includes an ARI (Acknowledgement Resource Indicator), and
the control section determines a PUCCH resource for transmission with the large-capacity PUCCH format based on the ARI and a correspondence relationship between the PUCCH resource and the ARI, which is independently set for each PUCCH format by higher layer signaling.

3. The user terminal according to claim 2, wherein
the reception section receives, as information on the correspondence relationship between the PUCCH resource and the ARI, information on a first correspondence relationship between a PUCCH resource related to a PUCCH format 3 and the ARI, and information on a second correspondence relationship between a PUCCH resource related to the large-capacity PUCCH format and the ARI, and
the control section, when determining to transmit the uplink control information with the PUCCH format 3, determines a PUCCH resource for transmission with the PUCCH format 3 based on the ARI and the first correspondence relationship, and when determining to transmit the uplink control information with the large-capacity PUCCH format, determines a PUCCH resource for transmission with the large-capacity PUCCH format based on the ARI and the second correspondence relationship.

4. The user terminal according to claim 2 or 3, wherein the control section interprets a TPC (Transmit Power Control) field included in the instruction information as the ARI.

5. The user terminal according to any of claims 1 to 4, wherein
the transmission section transmits terminal capability information indicating that the large-capacity PUCCH format can be set, and
the reception section receives information on whether or not to use the large-capacity PUCCH format, the information being transmitted according to the terminal capability information.

6. The user terminal according to claim 5, wherein the terminal capability information indicating that the large-capacity PUCCH format can be set is information different from terminal capability information indicating that carrier aggregation of more than 5 component carriers can be set.

7. A radio base station comprising:
a transmission section that transmits instruction information of a reception of a downlink shared channel on a downlink control channel;
a reception section that receives uplink control information on the reception of the downlink shared channel corresponding to the instruction information; and
a control section that controls a PUCCH resource to transmit the uplink control information, wherein
the control section controls a PUCCH resource to be transmitted with a large-capacity PUCCH format having a larger capacity than a PUCCH (Physical Uplink Control Channel) format 3, and
the control section controls to include, in the instruction information, information used for determining the PUCCH resource for transmission with the large-capacity PUCCH format.

8. A radio communication method, comprising:
detecting instruction information of a reception of a downlink shared channel on a downlink control channel;
transmitting uplink control information on the reception of the downlink shared channel corresponding to the instruction information;
determining a PUCCH format to transmit the uplink control information from a plurality of PUCCH formats including a large-capacity PUCCH format having a larger capacity than a PUCCH (Physical Uplink Control Channel) format 3; and
determining a PUCCH resource for transmission with the large-capacity PUCCH format based on the instruction information.
